# EUROPÄISCHE PATENTSCHRIFT

(11) **EP 2 186 964 B1**
(45) Veröffentlichungstag und Bekanntmachung des Hinweises auf die Patenterteilung: **09.02.2011**
(21) Anmeldenummer: 09175130.5
(22) Anmeldetag: 05.11.2009
(51) Int. Cl.: E04D 3/30, E04D 3/366, F24J 2/52, H01L 31/048

(54) **Dacheindeckung mit mindestens zwei Metallblechen zwischen Profilen und Solaranlage auf dieser Dacheindeckung**
Roofing with at least two sheet metals in between of profiles and solar unit on this roofing
Recouvrement avec au moins deux tôles métalliques entre des profilés et installation solaire sur ce recouvrement

(30) Priorität: 14.11.2008 DE 202008015141 U
(43) Veröffentlichungstag der Anmeldung: 19.05.2010
(73) Patentinhaber: SCHÜCO International KG, 33609 Bielefeld (DE)
(72) Erfinder: Imkamp, Gerd, 33334 Gütersloh (DE)
(74) Vertreter: Dantz, Jan Henning

(56) Entgegenhaltungen:
- EP-A- 0 905 795
- WO-A-86/02713
- CH-A5- 691 865
- DE-A1- 1 934 673
- DE-U1- 29 606 547
- DE-U1-202005 015 455
- US-A- 4 192 115
- US-A- 4 583 339

## Beschreibung

Die vorliegende Erfindung betrifft eine Eindeckung, insbesondere für ein Dach sowie eine Solaranlage.

Zum Eindecken von Gebäuden mit geformten Flachmaterial (Scharen) wird meist ein Metallblech verwendet, das seitlich über Aufkantungen kraftschlüssig mit einem benachbarten Metallblech verbunden wird. Ferner ist es auch bekannt, neben dem Umfalzen die Metallbleche über Löten, Verkleben oder Verschrauben miteinander zu verbinden. Hierbei muss das Metallblech exakt auf eine vorbestimmte Länge gefertigt und verarbeitet werden. Diese individuelle Anpassung der Metallbleche auf der Baustelle ist relativ aufwendig.

In der DE 200 01 641 ist eine Falzleisten-Anordnung offenbart, bei der ein U-förmiges Profil an einem Untergrund befestigt wird. Anschließend werden Abdeckscharen mit einer vorbestimmten Breite auf den Untergrund gelegt und randseitig in U-förmige Aufnahmen an dem Profil eingefügt. Das U-förmige Profil wird dann über eine Falzleis3tenkappe abgedeckt. Auch bei dieser Ausgestaltung ist es notwendig, die Abdeckscharen in vorbestimmter Breite zu fertigen und auszurichten, damit eine entsprechende Einführung in die Aufnahme des Profils möglich ist. Ein Toleranzausgleich in seitliche Richtung kann nicht vorgenommen werden. Zudem entsteht durch das mehrfache Falzen ein Materialverlust, der bei der Auslegung der Eindeckung berücksichtigt werden muss.

In der US 4 583 339 ist eine Eindeckung für ein Dach offenbart, dass zwei parallel angeordnete Profile besitzt, die an der einander zugewandten Seite eine Aufnahme für eine Randkante eines Metallblechs aufweisen, wobei nur ein Metallblech zwischen den beiden Profilen angeordnet ist.

Gerade bei Solaranlagen werden häufig Eindeckung benötigt, weil zur Erhöhung des Wirkungsgrades Photovoltaikmodule hinterlüftet werden müssen. Meist werden die Photovoltaikmodule über eine Anbindung beabstandet von einem Untergrund angeordnet, der dann mit einer Eindeckung versehen werden muss. Diese Eindeckung soll eine Witterungsbeständigkeit, UV-Beständigkeit, Wasserdichtheit sowie eine Trittfestigkeit haben, damit etwaige Reparatur- und Wartungsarbeiten vorgenommen werden können. Auch hier besteht der Bedarf an einer leicht zu montierenden Eindeckung unterhalb der Photovoltaikmodule.

Es ist daher Aufgabe der vorliegenden Erfindung eine Eindeckung zu schaffen, die leicht zu montieren ist und einen Toleranzausgleich in seitliche Richtung ermöglicht.

Diese Aufgabe wird mit einer Eindeckung mit den Merkmalen des Anspruches 1 gelöst.

Erfindungsgemäß weist die Eindeckung zwischen den beiden parallelen Profilen mindestens zwei Metallbleche auf, die sich in einem mittleren Bereich überlappen, wobei an dem unteren Metallblech im Bereich der Überlappung ein nach oben hervorstehender Abschnitt gebildet ist, der eine Auflage für das obere Metallblech bildet. Dadurch kann durch Änderung der Breite der Überlappung ein Toleranzausgleich in seitlicher Richtung durch Verschieben der Metallbleche erfolgen, ohne dass auf der Baustelle ein Verbiegen oder Abkanten der Metallbleche erfolgen muss. Die Metallbleche können dabei auf einfache Weise zu einer dichten Eindeckung miteinander verbunden werden, wobei aufgrund des hervorstehenden Abschnittes eine Beabstandung der Metallbleche gewährleistet ist, so dass durch den hervorstehenden Abschnitt eine sichere Abdichtung gewährleistet wird. Denn selbst wenn auf das untere Metallblech Feuchtigkeit kommt, kann diese nicht über den hervorstehenden Abschnitt strömen. Aufgrund der Anordnung der Metallbleche kann die Eindeckung auch begehbar für Wartungs- und Reparaturarbeiten ausgebildet werden.

Gemäß einer bevorzugten Ausgestaltung der Erfindung weist das obere Metallblech randseitig eine nach unten zu dem unterem Metallblech gerichteten Steg auf. Dieser Steg kann auch auf dem unteren Metallblech aufliegend, so dass die Feuchtigkeit zwei Barrieren besitzt, nämlich eine äußere Barriere in Form des nach unten gerichteten Steges und in einem inneren Bereich den hervorstehenden Abschnitt an dem unteren Metallblech.

Vorzugsweise ist die Aufnahme für eine Randkante eines Metallbleches durch ein im Querschnitt nach unten offenes U-Profil gebildet, so dass auch in dem Bereich des Profils keine Feuchtigkeit unterhalb der Eindeckung eindringen kann. Denn die U-förmige Aufnahme verhindert, dass Spritzwasser unter das Metallblech gelangen kann, insbesondere weil in die Aufnahme eine Randkante des Metallbleches eingefügt ist. Die Randkante kann dabei schräg nach oben gerichtet sein, beispielsweise in einem Neigungswinkel zwischen 5° und 20° relativ zu der Vertikalen.

In einer bevorzugten Ausfühnungsform der Erfindung sind zwischen den Profilen zwei baugleiche Metallbleche angeordnet, so dass die Eindeckung nur einen Typ eines Metallbleches benötigt. Die Metallbleche lassen sich dadurch auf einfache Weise vorfertigen und müssen auf der Baustelle lediglich montiert werden.

Die Metallbleche weisen an einer Seite vorzugsweise einen U-förmigen Randabschnitt und an der gegenüberliegenden Seite einen abgekanteten Steg auf. Der U-förmige Randabschnitt dient mit einem Bodenabschnitt als Auflage für ein oberes Metallblech in dem Bereich der Überlappung der Metallbleche. Ferner kann der U-förmige Randabschnitt mit dem äußeren Schenkel auch als Randkante in die Aufnahme an dem Profil eingefügt werden.

Um die Stabilität der Eindeckung zu erhöhen, können die Metallbleche in dem überlappenden Bereich miteinander verschraubt sein. Die Metallbleche können dabei in dem überlappenden Bereich auch einem Untergrund festgelegt sein, so dass auch hohe Windlasten sicher aufgenommen werden können.

Erfindungsgemäß wird auch eine Solaranlage bereitgestellt, bei der ein Solarkollektor über eine Anbindung mit ein oder mehreren Profilen gekoppelt ist, wobei beabstandet von dem Solarkollektor eine erfindungsgemäße Eindeckung vorgesehen ist. Dadurch kann der Solarkollektor hinterlüftet werden, um den Wirkungsgrad zu erhöhen. Die Eindeckung lässt sich einfach montieren, insbesondere kann die Solaranlage an bestehenden Dächern gut nachgerüstet werden. Vorzugsweise ist die Eindeckung dabei im Wesentlichen parallel zu dem Solarkollektor ausgerichtet.

Die Erfindung wird nachfolgend anhand mehrerer Ausführungsbeispiele mit Bezug auf die beigefügten Zeichnungen näher erläutert. Es zeigen:
- Figur 1: eine Seitenansicht eines Ausführungsbeispieles einer erfindungs- gemäßen Eindeckung im montierten Zustand;
- Figur 2: eine Eindeckung gemäß Figur 1 mit verringerter Breite;
- Figur 3: eine Seitenansicht der Metallbleche für die Eindeckung der Figur 1;
- Figur 4: eine Seitenansicht von Metallblechen für eine Eindeckung gemäß einer modifizierten Ausführungsform, und
- Figur 5: eine Seitenansicht einer erfindungsgemäßen Solaranlage im mon- tierten Zustand.

Eine Eindeckung umfasst zwei parallel angeordnete Profile 1, die leistenförmnig ausgebildet sind und an der einander zugewandten Seite eine Aufnahme 2 in Form einer U-förmigen nach unten offenen Nut aufweisen. Zwischen den Profilen 1 sind zwei abgekantete Metallbleche 3 angeordnet, die sich in einem mittleren Bereich zwischen den Profilen 1 teilweise überlappen. An dem im mittleren Bereich unten angeordneten Metallblech 3 ist randseitig ein nach oben hervorstehender Abschnitt 5 vorgesehen, der aus im Querschnitt U-förmig ausgebildeten Stegen gebildet ist. An dem hervorstehenden Abschnitt 5 ist an der Oberseite eine ebene Auflage 16 ausgebildet, auf der ein Abschnitt des oberen Metallbleches 3 aufliegt. An dem oberen Metallblech 3 ist auf der zu dem Profil 1 abgewandten Seite ein nach unten gerichteter Steg 4 angeordnet, der zu dem unteren Metallblech 3 gerichtet ist und auf diesem aufliegt. Das obere Metallblech 3 umgreift daher den randseitig hervorstehenden Abschnitt 5 des unteren Metallbleches 3.

Die Metallbleche 3 sind baugleich ausgeführt, wobei das obere Metallblech 3 auf der zu dem Profil 1 gewandten Seite einen U-förmigen nach unten gerichteten Abschnitt 5 aufweist, an dem randseitig eine Randkante 15 ausgebildet ist, die in die Aufnahme 2 an dem Profil 1 eingefügt ist. An der gegenüberliegenden Seite ist das untere Metallblech 3 mit einer Randkante 4' in die Aufnahme 2 eingefügt, wobei die Randkanten 4' und 15 zur Vertikalen leicht geneigt aufspreizend angeordnet sind.

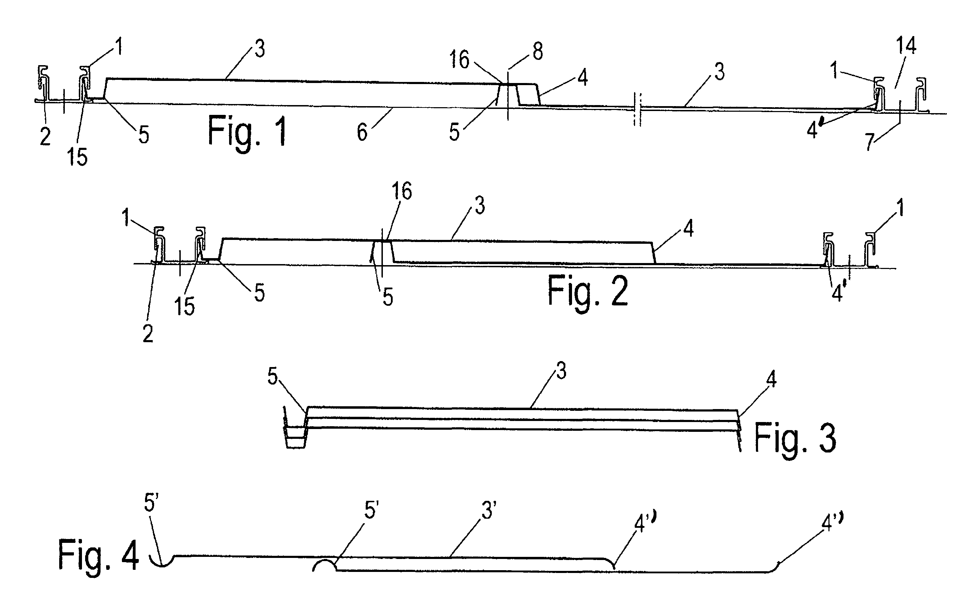

Bei der Montage können die Profile 1 am Untergrund festgelegt werden und anschließend werden die Metallbleche 3 in Breite ausgerichtet. Hierfür können die Metallbleche 3 in der entsprechenden Breite übereinander gelegt werden, wobei abhängig von dem Abstand der Profile 1 die Breite des überlappenden Bereiches vorgegeben wird. In Figur 1 ist dabei ein relativ großer Abstand zwischen den Profilen 1 vorgesehen, der bei dem Montagebeispiel der Figur 2 verringert wurde. Dadurch ist der überlappende Bereich der beiden Metallbleche 3 bei dem Ausführungsbeispiel der Figur 2 vergrößert worden.

In Figur 3 sind die Metallbleche 3 in einer gestapelten Position dargestellt. Die Metallbleche 3 können in vorgefertigter Weise auf die Baustelle geliefert und dort montiert werden.

In Figur 4 ist eine modifizierte Ausgestaltung von Metallblechen 3' gezeigt, die an entsprechenden Profilen 1 montiert werden können. Die Metallbleche 3' weisen an einer Leiste eine abgebogene stegförmige Leiste 4" und an der gegenüberliegenden Leiste einen U-formigen Abschnitt 5' auf, wobei die Leiste 4" und der Abschnitt 5' nicht mehr durch Kanten hergestellt sind, sondern eine gerundete Form aufweisen.

Die Metallbleche 3 und 3' sind dabei so gestaltet, dass die Stege 4 und der U-förmige Abschnitt 5 eine Höhe haben, die der maximalen Wassersteighöhe entspricht, so dass keine Feuchtigkeit durch die Metallbleche 3 unter die Eindeckung gelangen kann.

Die Metallbleche 3 bzw. 3' können an der Auflage 16 miteinander verschraubt oder verklebt sein. Auch eine Verschraubung 8 in einen Untergrund 6 ist zur Erhöhung der Stabilität möglich.

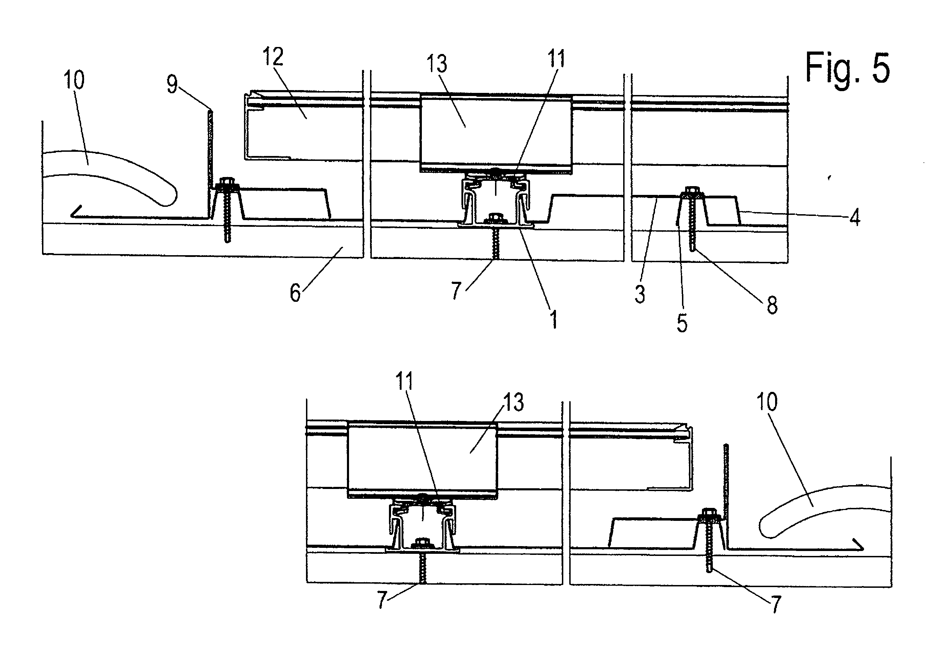

In Figur 5 ist eine Solaranlage mit einer erfindungsgemäßen Eindeckung gezeigt. Die Solaranlage ist auf einem Dach montiert, bei dem benachbart Pfannen 10 vorgesehen sind, die über eine Pfannenkopplung 9 mit der Solaranlage verbunden sind. Die Solaranlage umfasst Solarkollektoren 12, die als plattenförmige Elemente ausgebildet sind und über eine Kollektoranbindung 13 mit einer Aufständerung 11 verbunden sind, die an einem Profil 1 festgelegt ist. Jeder Solarkollektor ist dabei mit mehreren Profilen 1 über eine Aufständerung 11 und eine Kollektoranbindung 13 verbunden, wobei der Solarkollektor 12 im Wesentlichen parallel zur Ebene der Eindeckung angeordnet ist.

Durch die beabstandete Anordnung des Solarkollektors 12 zu den Metallblechen 3 der Eindeckung ist eine Hinterlüftung der Solarkollektoren 12 möglich. Die Profile 1 sind dabei über Schrauben 7 mit dem Untergrund 6 verbunden, an dem auch Schrauben 8 zur Fixierung der Metallbleche 3 in dem überlappenden Bereich montiert sind.

In dem dargestellten Ausführungsbeispiel sind zwei Metallbleche 3 zwischen zwei parallelen Profilen 1 angeordnet. Es ist natürlich auch möglich, drei oder mehr Metallbleche 3 zwischen zwei parallelen Profilen 1 anzuordnen. Ferner kann die Geometrie der Metallbleche 3 modifiziert werden, beispielsweise kann die Länge der Stege 4 und/oder die Form des U-förmigen Abschnittes 5 modifiziert werden.

## Patentansprüche

1. Eindeckung, insbesondere für ein Dach, mit zwei parallel angeordneten Profilen (1), die an der einander zugewandten Seite ein Aufnahme (2) für eine Randkante (4', 15) eines Metallbleches (3) aufweisen, **dadurch gekennzeichnet, dass** zwichen den Profilen (1) mindestens zwei Metallbleche (3) angeordnet sind, die sich in einem mittleren Bereich überlappen und an dem unteren Metallblech (3) im Bereich der Überlappung ein nach oben hervorstehender Abschnitt (5) gebildet ist, der eine Auflage (16) für das obere Metallblech (3) bildet.

2. Eindeckung nach Anspruch 1, **dadurch gekennzeichnet, dass** das obere Metallblech (3) randseitig einen nach unten zu dem unteren Metallblech (3) gerichteten Steg (4) aufweist.

3. Eindeckung nach Anspruch 1 oder 2, **dadurch gekennzeichnet, dass** die Aufnahme (2) für eine Randkante (15) eines Metallbleches (3) durch ein im Querschnitt nach unten offenes U-Profil (5) gebildet ist.

4. Eindeckung nach einem der Ansprüche 1 bis 3, **dadurch gekennzeichnet, dass** in jeder Aufnahme (2) eine schräg nach oben gerichtete Randkante (4', 15) eines Metallbleches (3) eingefügt ist.

5. Eindeckung nach einem der Ansprüche 1 bis 4, **dadurch gekennzeichnet, dass** zwei baugleiche Metallbleche (3) zwischen den Profilen (1) angeordnet sind.

6. Eindeckung nach einem der Ansprüche 1 bis 5, **dadurch gekennzeichnet, dass** die Metallbleche (3) an einer Seite einen U-förmigen Randabschnitt (5) und an der gegenüberliegenden Seite einen abgekanteten Steg (4) aufweisen.

7. Eindeckung nach einem der Ansprüche 1 bis 6, **dadurch gekennzeichnet, dass** die Metallbleche (3) in dem überlappenden Bereich miteinander verschraubt sind.

8. Eindeckung nach einem der Ansprüche 1 bis 7, **dadurch gekennzeichnet, dass** die Metallbleche (3) in dem überlappenden Bereich an einem Untergrund festgelegt sind.

9. Solaranlage, insbesondere für Dächer, mit einem Solarkollektor (12), der über eine Anbindung (11, 13) mit ein oder mehreren Profilen (1) gekoppelt ist, **dadurch gekennzeichnet, dass** beabstandet von dem Solarkollektor (12) eine Eindeckung nach einem der vorhergehenden Ansprüche vorgesehen ist.

10. Solaranlage nach Anspruch 9, **dadurch gekennzeichnet, dass** die Eindeckung im Wesentlichen parallel zu dem Solarkollektor (12) ausgerichtet ist.

## Claims

1. Cladding, in particular for a roof, with two profiles (1) arranged in parallel which on the mutually facing side have a receptacle (2) for an edge (4' , 15) of a metal sheet (3), **characterized in that** at least two metal sheets (3) which overlap in a central region are arranged between the profiles (1) and an upwardly projecting portion (5) which forms a support (16) for the upper metal sheet (3) is formed on the lower metal sheet (3) in the region of the overlapping.

2. Cladding according to Claim 1, **characterized in that** the upper metal sheet (3) has on the edge a web (4) directed downwardly towards the lower metal sheet (3).

3. Cladding according to Claim 1 or 2, **characterized in that** the receptacle (2) for an edge (15) of a metal sheet (3) is formed by a U-profile (5) which is downwardly open in cross section.

4. Cladding according to one of Claims 1 to 3, **characterized in that** an obliquely upwardly directed edge (4', 15) of a metal sheet (3) is inserted in each receptacle (2).

5. Cladding according to one of Claims 1 to 4, **characterized in that** two structurally identical metal sheets (3) are arranged between the profiles (1).

6. Cladding according to one of Claims 1 to 5, **characterized in that** the metal sheets (3) have a U-shaped edge portion (5) on one side and a folded web (4) on the opposite side.

7. Cladding according to one of Claims 1 to 6, **characterized in that** the metal sheets (3) are screwed to one another in the overlapping region.

8. Cladding according to one of Claims 1 to 7, **characterized in that** the metal sheets (3) are fastened to a base in the overlapping region.

9. Solar installation, in particular for roofs, with a solar collector (12) which is coupled via a link (11, 13) to one or more profiles (1), **characterized in that** a cladding according to one of the preceding claims is provided at a distance from the solar collector (12).

10. Solar installation according to Claim 9, **characterized in that** the cladding is oriented substantially parallel to the solar collector (12).

## Revendications

1. Recouvrement, en particulier pour un toit avec deux profilés (1) disposés parallèlement qui présentent sur le côté tourné vers l'autre, un logement (2) pour une arête de bord (4', 15) d'une tôle métallique (3), **caractérisé en ce qu'**entre les profilés (1) sont disposées au moins deux tôles métalliques (3) qui se chevauchent dans une zone centrale et sur la tôle métallique inférieure (3) dans la zone du chevauchement est formée une section dépassant vers le haut (5) qui forme un appui (16) pour la tôle métallique supérieure (3).

2. Recouvrement selon la revendication 1, **caractérisé en ce que** la tôle métallique supérieure (3) présente, côté bord, une nervure (4) dirigée vers le bas vers la tôle métallique inférieure (3).

3. Recouvrement selon la revendication 1 ou 2, **caractérisé en ce que** le logement (2) pour une arête de bord (15) d'une tôle métallique (3) est formé par un profilé en U (5), dont la section transversale est ouverte vers le bas.

4. Recouvrement selon l'une quelconque des revendications 1 à 3, **caractérisé en ce que** dans chaque logement (2) est insérée une arête de bord (4', 15) dirigée en biais vers le haut d'une tôle métallique (3).

5. Recouvrement selon l'une quelconque des revendications 1 à 4, **caractérisé en ce que** deux tôles métalliques (3) de même construction sont disposées entre les profilés (1).

6. Recouvrement selon l'une quelconque des revendications 1 à 5, **caractérisé en ce que** les tôles métalliques (3) présentent sur un côté, une section de bord en forme de U (5) et sur le côté opposé, une nervure biseautée (4).

7. Recouvrement selon l'une quelconque des revendications 1 à 6, **caractérisé en ce que** les tôles métalliques (3) sont vissées l'une avec l'autre dans la zone de chevauchement.

8. Recouvrement selon l'une quelconque des revendications 1 à 7, **caractérisé en ce que** les tôles métalliques (3) sont fixées dans la zone de chevauchement sur un fond.

9. Installation solaire, en particulier pour des toits, avec un capteur solaire (12) qui est couplé par une liaison (11, 13) à un ou plusieurs profilés (1), **caractérisée en ce qu'**un recouvrement selon l'une quelconque des revendications précédentes est prévu à distance du capteur solaire (12).

10. Installation solaire selon la revendication 9, **caractérisé en ce que** le recouvrement est orienté essentiellement parallèlement au capteur solaire (12).
